# EUROPÄISCHE PATENTANMELDUNG

(11) **EP 1 508 429 A1**
(43) Veröffentlichungstag der Anmeldung: **23.02.2005**
(21) Anmeldenummer: 04405044.1
(22) Anmeldetag: 22.01.2004
(51) Int. Cl.: B29C 70/48, B29C 70/52, B29C 70/86, B29C 70/76, B29C 65/00, B29C 65/56, F16B 19/00, F16B 5/04

(54) **Verbindungselement aus einem faserverstärkten Kunststoff zur Verbindung zweier Strukturbauteile aus Kunststoff**

(30) Priorität: 21.08.2003 EP 03405611
(71) Anmelder: Alcan Technology & Management Ltd., 8212 Neuhausen am Rheinfall (CH)
(72) Erfinder: Dentella, Riccardo, 8046 Zürich (CH); Henne, Markus, 8200 Schaffhausen (CH); Sauter, Michael, 8586 Erlen (CH)

(57) **Zusammenfassung**

Strukturbauteil (30) aus einem Kunststoff mit einem Verbindungselement (31) aus einem faserverstärkten Kunststoff zum Verbinden des Strukturbauteils mit wenigstens einem zweiten Bauteil (35), dadurch gekennzeichnet, dass das Verbindungselement ein vom Strukturbauteil abragendes Stiftförmiges Element sowie ein Fussteil (33) mit einer gegenüber dem stiftförmigen Element fussartigen Verbreiterung enthält, und das Fussteil an das stiftförmige Element anschliesst und integral im Strukturbauteil verankert ist, und das stiftförmige Element der Erstellung einer form- und/oder kraftschlüssigen, nietartigen Verbindung des Strukturbauteils mit wenigstens dem zweiten Bauteil dient.

## Beschreibung

Vorliegende Erfindung betrifft ein Strukturbauteil aus einem Kunststoff mit einem Verbindungselement zum Verbinden des Strukturbauteils mit wenigstens einem zweiten Bauteil. Die Erfindung betrifft ferner ein Verbindungselement, ein Verfahren zur Herstellung des Strukturbauteils mit einem Verbindungselement, eine Verbindung zwischen dem Strukturbauteil und dem zweiten Bauteil unter Verwendung eines erfindungsgemässen Verbindungselementes sowie ein Verfahren zur Herstellung der Verbindung.

Bauteile aus Kunststoff, insbesondere Bauteile aus faserverstärktem Kunststoff gewinnen in vielen Bereichen zunehmends an Bedeutung. Faserverstärkte Kunststoffbauteile werden schon seit einiger Zeit als Strukturbauteile eingesetzt, d.h. die besagten Bauteile sind struktureller Bestandteil eines diese Bauteile enthaltenden Gegenstandes, und übernehmen häufig eine tragende Funktion oder weitere wichtige Aufgaben. Solche Bauteile sind dementsprechend mechanischen Belastungen ausgesetzt und müssen daher wohl überlegt konzipiert sein.

Bauteile aus faserverstärktem Kunststoff sind bsp. in jenen Anwendungsbereichen gefragt, in welchen die Bauteile einerseits hohen mechanischen Anforderungen genügen müssen und gleichzeitig jedoch nicht von hohem Gewicht sein dürfen. Dies ist insbesondere im Strassen- und Schienenfahrzeugbau, in der Luft- und Raumfahrt, sowie bei Wasserfahrzeugen der Fall. Ferner finden solche Bauteile aus den vorgenannten Gründen auch zunehmend Anwendung in Sportgeräten.

Bauteile aus Kunststoff bzw. faserverstärktem Kunststoff müssen als Bestandteil eines herzustellenden Gegenstandes, z.B. eines Fahrzeuges, in der Regel mit weiteren Bauteilen verbunden werden, wobei diese weiteren Bauteile oftmals aus einem anderen Material als Kunststoff beschaffen sind. D.h. der Gegenstand wird häufig in einer sogenannten Mischbauweise hergestellt und enthält weitere Bauteile aus verschiedenen Werkstoffen, wie z.B. Bauteile aus Metall oder Verbundbauteile mit sandwichartigem Materialaufbau.

Der Verbund eines Kunststoffbauteils mit weiteren Bauteilen kann mittels verschiedener Befestigungstechniken, wie Schrauben, Nieten oder Kleben geschehen. Müssen zwei Bauteile aus einem thermoplastischen Kunststoff gefügt werden, so können die beiden Bauteile gegebenenfalls auch mittels Kunststoff-Schweissen verbunden werden.

Während letztere Verbindungstechnik bei Mischbauweise, d.h. bei Verwendung von Bauteilen aus nicht thermoplastischem Material, nicht einsetzbar ist, weisen Klebverbindungen den Nachteil auf, dass sie gegenüber Abschälkräften wenig dauerhaft sind, eine relativ lange Aushärtungszeit haben und ferner verhältnismässig grosse Fügeflächen beanspruchen.

Herkömmliche mechanische Verbindungen wie Schrauben oder Nieten weisen wiederum den Nachteil auf, dass im Strukturbauteil Bohrungen vorgenommen werden müssen, durch welche kräftetragende Fasern im Strukturbauteil durchtrennt werden. Bohrungen führen ferner in anisotropen Werkstoffen, wie es Faserverbundbauteile aus Kunststoff sind, zu grossen Spannungsüberhöhungen und somit zu einer Schwächung der Struktur im Verbundbereich. Es zeichnet sich daher eine erhöhte Neigung zu Rissbildung ab. Bei sogenannten Stanznieten werden die Strukturbauteile im Bereich des Nietes durch Faserbrüche und Mikrorisse beim Setzvorgang zusätzlich beschädigt.

Der vorliegenden Erfindung liegt daher die Aufgabe zugrunde, eine Verbindungstechnik und die dazugehörigen Mittel vorzuschlagen, welche den vorgenannten mechanischen Befestigungstechniken bezüglich Dauerhaftigkeit gegenüber mechanischer Beanspruchung überlegen ist.

Die Aufgabe wird erfindungsgemäss dadurch gelöst, dass das Verbindungselement aus einem faserverstärkten Kunststoff ist und ein vom Strukturbauteil abragendes stiftförmiges Element sowie Verankerungsmittel enthält, und die Verankerungsmittel an das stiftförmige Element anschliessen und integral im Strukturbauteil eingebunden sind, und das stiftförmige Element der Erstellung einer form- und/oder kraftschlüssigen, nietartigen Verbindung des Strukturbauteils mit wenigstens dem zweiten Bauteil dient.

In bevorzugter Ausführung der Erfindung sind die Verankerungsmittel aus einem Fussteil mit einer gegenüber dem stiftförmigen Element fussartigen Verbreiterung, wobei das Fussteil integral an das stiftförmige Element anschliesst und ferner integral im Strukturbauteil verankert ist.

Das stiftförmige oder auch stabförmige Element ist in der Art eines aus dem Strukturbauteil herausragenden Schaftes. Das stiftförmige Element weist bevorzugt einen kreisförmigen Querschnitt auf, d.h. es ist bolzen-, zapfen- bzw. zylinderförmig.

Grundsätzlich kann der Stift beliebige Querschnittsformen, wie polygonale Formen (z.B. dreieckig, rechteckig, quadratisch, sechs- oder achteckig) sowie ovale oder elliptische Formen annehmen. Die Querschnittsform oder -grösse kann in Längsrichtung des stiftförmigen Elementes gleichförmig oder veränderlich sein.

Das stiftförmige Element ist vorzugsweise massiv ausgebildet. Es kann jedoch auch vollständig oder lediglich in seinem zum zweiten Bauteil gerichteten Endabschnitt hohl ausgebildet sein und bsp. als Hohlzylinder bzw. Teilhohlzylinder vorliegen.

In bevorzugter Ausführung besteht das Verbindungselement aus einem faserverstärktem Kunststoff und enthält ausgehend von seinen Verankerungsmittel, insbesondere ausgehend von seinem Fussteil, in Längsrichtung des stiftförmigen Elements bis zum freien Ende des stiftförmigen Elements verlaufende Fasern oder Faserstränge. Die Fasern bzw. Faserstränge sind von den Verankerungsmittel bzw. vom Fussteil bis zum freien Ende des stiftförmigen Elements vorzugsweise aus einem Stück gebildet, d.h. durchgehend, unterbruchslos ausgebildet. Die Verstärkungsfasern sind somit vom Stift in die im Strukturbauteil eingebetteten Verankerungsmittel bzw. in den Fussteil geführt und verankern auf diese Weise das Verbindungselement im Strukturbauteil. Die Fasern können im Verbindungselement auch schichtweise angeordnet sein.

Das Strukturbauteil ist vorzugsweise ebenfalls vollständig oder zumindest im Bereich des integrierten Verbindungselements aus einem faserverstärkten Kunststoff.

Das Fussteil weist in Draufsicht bsp. eine kreisförmige Gestalt mit einer zum Zentrum hin zunehmenden Verdickung des Querschnitts auf. Das Fussteil ist bsp. von einer Gestalt, welche einem Schraubenkopf, und insbesondere einem Nietkopf ähnlich ist.

In bevorzugter Ausführung der Erfindung ist das Fussteil durch Aufspreizen des Endabschnittes des abgelängten Stift-Elementes hergestellt und weist radial angeordnete Risse und Spaltlinien auf, wobei einzelne voneinander getrennte Stränge oder Finger von Fasern bzw. Faserstränge oder Gruppen von Fasern oder Fasersträngen im Verbund mit der Kunststoffmatrix ausgebildet sind und dem Fussteil eine fransenartige Gestalt geben. Das Fussteil mit seinen radial ausgerichteten fransen- oder fingerförmigen Faserverbundelementen gemäss obiger Beschreibung weist eine relative grosse Oberfläche auf, mit welcher die Kunststoffmatrix des Strukturbauteils eine innige Verbindung eingeht. Die Vielzahl der besagten länglichen Faserverbundelemente verankern daher das Fussteil ausgezeichnet im Strukturbauteil.

Das Fussteil enthält bevorzugt vom stiftförmigen Element ausgehende und in das Fussteil führende Fasern oder Faserstränge, welche im Übergang vom stiftförmigen Element zum Fussteil abgelenkt bzw. umgebogen sind und im Fussteil in einem Winkel, z.B. in einem Winkel von 5° bis 90°, vorteilhaft in einem Winkel von 45° bis 90°, und insbesondere in einem Winkel von rund 90°, zur Längsrichtung des stiftförmigen Elementes verlaufen. Die Fasern oder Faserstränge sind im Fussteil ausgehend vom stiftförmigen Element bevorzugt radial bzw. strahlenförmig aufgefächert. Das Verbindungselement wird zweckmässig sowohl durch das Fussteil als auch durch die in diesem geführten Fasern oder Faserstränge im Strukturbauteil integral verankert.

In einer weiteren Ausführung der Erfindung enthält das stiftförmige Element des Verbindungselements Fasern oder Faserstränge, wobei die Verankerungsmittel aus Fasern oder Fasersträngen bestehen, welche einzeln einends aus dem stiftförmigen Element austreten und das Verbindungselement im Strukturbauteil verankern. Die Fasern können bsp. büschelartig aus dem stiftförmigen Element austreten. Ferner können die Fasern oder Faserstränge bereits mit einem Kunststoff imprägniert sein. Bevorzugt verlaufen die einends aus dem stiftförmigen Element austretenden Fasern oder Faserstränge der Verankerungsmittel durchgehend und unterbruchslos. Die Fasern oder Faserstränge können insbesondere in Längsrichtung des stiftförmigen Elements unterbruchslos bis zu dessen anderen freien Ende weiterlaufen.

Die Fasern oder Faserstränge der Verankerungsmittel im Strukturbauteil können bei oder nach ihrem Austritt aus dem stiftförmigen Element abgelenkt sein und in einem Winkel, z.B. in einem Winkel von 5° bis 90°, vorteilhaft in einem Winkel von 45° bis 90°, und insbesondere in einem Winkel von rund 90°, zum stiftförmigen Element angeordnet sein. Die Anordnung kann bsp. fächer- bzw. strahlenförmig sein.

Das Strukturbauteil kann aus einem thermoplastischen oder duroplastischen Kunststoff bestehen. In bevorzugter Ausführung der Erfindung besteht das Strukturbauteil aus einem thermoplastischen Kunststoff, insbesondere aus einem thermoplastischen Kunststoff, welcher zur Verarbeitung in einem LCM-Verfahren geeignet ist. Das Strukturbauteil besteht insbesondere aus einem Poly(butylenterephthalat)-(PBT), einem PBT-Blend (Legierung) oder Polyamid-(PA)-Polymersystem, wie Polyamid-12 (PA12). Ferner kann das Strukturbauteil auch aus einem hochtemperaturfesten Kunststoff wie PEEK (Polyetheretherketon) sein.

Bei der Verarbeitung von PBT-Matrixsystemen, wird das Matrixmaterial vorzugsweise in Form von mit einem (Polymerisations-) Katalysator vermischten Oligomeren in das Formwerkzeug injiziert.

Das Strukturbauteil enthält bevorzugt Fasergebilde. Die Fasergebilde können in Form von textilen Flächengebilden, z.B. Vliese, "Non-wovens", nicht-maschenbildenden Systemen, wie Gewebe, uni- oder bidirektionale Gelege, Geflechte oder Matten oder maschenbildenden Systemen, wie Gestricke oder Gewirke sowie als gestickte Strukturen vorliegen. Die verwendeten Fasern sind vorzugsweise Langfasern mit Faserlängen von z.B. 3-150 mm oder Endlosfasern.

Die Verstärkungsfasern des Strukturbauteil können Glasfasern, Kohlenstofffasern, Aramidfasern oder Gemische davon sein. Weitere Faserntypen aus Kunststoff oder Naturfasern können ebenfalls Verwendung finden. Die Verstärkungsfasern des Strukturbauteil sind jedoch bevorzugt Kohlenstofffasern.

Das Strukturbauteil enthält bsp. einen Fasergehalt von über 30 Vol.-%, und vorteilhaft einen Fasergehalt von 40-70 Vol.-%.

Das Verbindungselement kann aus einem thermoplastischen oder duroplastischen Kunststoff bestehen. In bevorzugter Ausführung der Erfindung besteht das Verbindungselement aus einem thermoplastischen Kunststoff, insbesondere aus einem thermoplastischen Kunststoff, welcher zur Verarbeitung in einem LCM-Verfahren geeignet ist. Das Verbindungselement besteht insbesondere aus einem Polybutylenterephthalat-(PBT)-, PBT-Blend- oder Polyamid-(PA)-Polymersystem, wie Polyamid-12 (PA12). Ferner kann das Verbindungselement auch aus einem hochtemperaturfesten Kunststoff wie PEEK (Polyetheretherketon) sein. In bevorzugter Ausführung der Erfindung besteht das Verbindungselement aus demselben Kunststoff wie das Strukturbauteil, in welches das Verbindungselement integriert ist.

Es ist auch denkbar, dass das Strukturbauteil ein faserverstärktes Kunststoffbauteil aus einem duroplastischen Kunststoff ist und das oder die in das Strukturbauteil integrierten Verbindungselemente aus einem thermoplastischen Kunststoff bestehen, wie z.B. PBT oder PA.

Das Verbindungselement kann Einzelfasern bzw. Faserstränge oder Fasergebilde enthalten. Die Fasergebilde können in Form von textilen Flächengebilden, z.B. Vliese, "Non-wovens", nicht-maschenbildenden Systemen, wie Gewebe, uni- oder bidirektionale Gelege, Geflechte oder Matten oder maschenbildenden Systemen, wie Gestricke oder Gewirke sowie als gestickte Strukturen vorliegen. Die verwendeten Fasern sind vorzugsweise Langfasern mit Faserlängen von z.B. 3-50 mm oder Endlosfasern. In bevorzugter Ausführung der Erfindung enthält das Verbindungselement eine Vielzahl von in Längsrichtung des stiftförmigen Elementes angeordnete Fasern bzw. Faserstränge, welche wie oben beschrieben, in die Verankerungsmittel des Verbindungselements reichen.

Die Fasern bzw. Faserstränge sind vorteilhaft unabhängig voneinander in der Kunststoffmatrix des Verbindungselementes eingebettet. Die Fasern bzw. Faserstränge erstrecken sich vorteilhaft über die gesamte Länge des Stiftes. Es ist auch möglich, dass die genannten Fasern bzw. Faserstränge über quer laufende Fasern miteinander verbunden sind, insbesondere lose miteinander verbunden sind.

Die Verstärkungsfasern des Verbindungselements können Glasfasern, Kohlenstofffasern, Aramidfasern oder Gemische davon sein. Weitere Faserntypen aus Kunststoff oder Naturfasern können ebenfalls Verwendung finden. Da Kohlenstofffasern eine relativ geringe Neigung zum Kriechen aufweisen, was bei der erfindungsgemässen Verbindungstechnik wesentlich ist, bestehen die Verstärkungsfasern des Verbindungselements jedoch bevorzugt aus Kohlenstoff.

Das Verbindungselement enthält bsp. einen Fasergehalt von über 30 Vol.-%, und vorteilhaft einen Fasergehalt von 40-70 Vol.-%.

In bevorzugter Ausführung sind die Verstärkungsfasern des Verbindungselements aus demselben Werkstoff wie jene des Strukturbauteils, in welches das Verbindungselement integriert ist.

Das Verbindungselement kann an seinem Schaft bzw. stiftförmigen Element einen integrierten Abstandhalter enthalten, dies zur Gewährleistung eines definierten Abstandes zwischen dem gefügten Strukturbauteil und dem zweiten Bauteil, bsp. zur Aufnahme eines Klebstoffes (Klebspalt) zwischen dem Strukturbauteil und dem zweiten Bauteil, bzw. zwischen dem Strukturbauteil und einem zwischen dem Strukturbauteil und zweiten Bauteil angeordneten dritten Bauteil.

Der besagte Abstandhalter kann in Form einer Verbreiterung bzw. Verdickung des stiftförmigen Elements, d.h. Vergrösserung des Querschnittes, an seinem den Verankerungsmittel zugeordneten Endabschnitt ausgebildet sein. Die Verbreiterung ist vorzugsweise eine ringförmige Verbreiterung des Querschnittes des stiftförmigen Elements. Zwischen dem Abstandhalter und dem anschliessenden Abschnitt des stiftförmigen Elements mit kleinerem Querschnitt ist ein stufen- bzw. treppenförmiger Übergang vorgesehen. Zur Herstellung der Verbindung ist vorgesehen, dass das zu fügende Bauteil an die Abstufung und in Distanz zum Strukturbauteil zu liegen kommt, da der gegenüber dem stiftförmigen Element vergrösserte Durchmesser des Abstandhalters grösser ist als die Öffnung bzw. Bohrung im zweiten Bauteil, durch welches das stiftförmige Element geführt wird.

Enthält das Strukturbauteil mehrere Verbindungselemente mit Abstandhalter von gleicher Abmessung, so bilden die gefügten Bauteile einen gleichmässigen Abstand über die gesamte Fügefläche aus.

Das erfindungsgemässe Verbindungselement der oben beschriebenen Art und Beschaffenheit kann durch folgende Verfahrensschritte hergestellt werden: In einem ersten Schritt wird ein Stabausgangsmaterial aus einem faserverstärkten Kunststoff hergestellt. Die Herstellung des Stabausgangsmaterials kann in einem Heisspressprozess oder Pultrusionsverfahren erfolgen. Besteht das Verbindungselement aus einem PBT oder PBT-Blend, so kann das, bsp. im Pultrusionsprozess verarbeitete, Ausgangsmaterial zyklische Oligomere des PBT (CPBT), insbesondere CBT™, oder ein Blend davon, wie nachfolgend näher beschrieben, beinhalten.

Das Stabausgangsmaterial enthält bevorzugt eine Vielzahl von in Längsrichtung des Stiftes angeordnete Fasern bzw. Faserstränge. Die Fasern bzw. Faserstränge sind vorteilhaft unabhängig und lose voneinander in der Kunststoffmatrix des Stabausgangsmaterials angeordnet. Es kann jedoch auch vorgesehen sein, dass die in Stablängsrichtung ausgerichteten Fasern bzw. Faserstränge über quer laufende Fasern miteinander verbunden sind, bsp. lose verbunden sind. Die Fasern können beispielsweise (im Querschnitt) in konzentrischen Kreisen im Stabausgangsmaterial angeordnet sein. Die Fasern können im weiteren im Stabausgangsmaterial axial verdreht bzw. spiralförmig angeordnet sein.

Das Stabausgangsmaterial kann bsp. aus einem Hybridgarn hergestellt werden. Das Hybridgarn besteht hierbei aus Verstärkungsfasern, wie Kohlenstofffasern, und Thermoplastfasern, wie PBT-Fasern. Letztere Fasern bilden schlussendlich beim Heisspressen bzw. Pultrudieren oder einem anderen Verarbeitungsverfahren durch Einleitung eines Aufschmelzprozesses die Matrix des Stabausgangsmaterials aus.

In spezieller Ausführung des Herstellungsverfahrens wird das Ausgangsmaterial, ein Mischgarn, Hybridgarn oder ein pulverimprägniertes Garn, auf grossen Spulen einer Pultrusionsanlage zugeführt. Während der Pultrusion werden kontinuierlich Endlosfasern oder Stapelfasern von einem Spulenständer abgezogen. Der zwischen den Fasern enthaltene Thermoplast wird in einer Vorwärmezone erwärmt und in einer Vorheizzone aufgeschmolzen. Durch eine Formdüse wird das Material kompaktiert und anschliessend in einer Kühlzone unter die Kristallisationstemperatur gekühlt. Durch den kontinuierlichen Herstellungsprozess werden im Vergleich zu anderen Verfahren (bsp. Heisspressen) geringere Produktionskosten erzielt.

Das in beliebiger Länge vorliegende Stabausgangsmaterial wird auf eine vorbestimmte Soll-Länge zu einzelnen Stift-Elementen abgelängt. Die genannten Fasern bzw. Faserstränge erstrecken sich dabei vorteilhaft über die gesamte Länge eines abgelängten Stift-Elements.

Ein Endabschnitt des Stift-Elements wird in einem anschliessenden Schritt in ein Fussteil der oben beschriebenen Art und Beschaffenheit umgeformt. Die Umformung kann mittels eines Stempels, insbesondere mittels eines erwärmten bzw. beheizten Stempels, unter Wärmeeinwirkung erfolgen, wobei der Endabschnitt zu einem Fussteil in Form einer fussartigen Verbreiterung umgeformt, insbesondere plastisch umgeformt wird. Dazu wird die thermoplastische Kunststoffmatrix des umzuformenden Abschnittes des Stift-Elements durch Wärmeeinwirkung zweckmässig auf wenigstens ihre Erweichungstemperatur erwärmt, welche eine plastische Umformung erlaubt. Die Umformung kann auch mittels Fliesspressprozess geschehen.

Der Umformvorgang beinhaltet vorzugsweise eine Verbreiterung des Stiftendabschnittes unter gleichzeitiger Stauchung desselbigen. Der Stiftendabschnitt wird bevorzugt zu einem umlaufenden, kreisförmigen Fussteil umgeformt.

Das Fussteil weist in einer Ausführungsvariante der Erfindung im Zentrum eine kraterartige Vertiefung auf. Der dazugehörige Stempel zur Herstellung des Fussteils, weist eine vorzugsweise konkave Vertiefung auf, mit einer im Zentrum des Stempels angebrachten dornartigen Erhebung.

Beim Umformvorgang werden die Verstärkungsfasern im Fussteil vorzugsweise radial und in einem Winkel zur Längsrichtung des Stiftes umgebogen und aufgefächert. Enthält das Verbindungselement schichtweise angeordnete Fasern, so werden diese entsprechend schichtweise umgebogen und aufgefächert.

In einer weiteren Ausführung der Erfindung wird das Fussteil fransenartig bzw. fingerartig aufgespreizt, wobei die einzelnen Fransen oder Finger durch Fasern bzw. Faserstränge oder Gruppen von Fasern oder Fasersträngen und der diese umgebenden oder an diesen haften bleibenden Kunststoffmatrix gebildet werden. Das Aufspreizen bzw. Aufspalten geschieht durch Einwirkung mechanischer Kräfte wie die eines Stempels auf einen Endabschnitt des Stift-Elements und basiert hauptsächlich auf einer Kombination von spröder Deformation und Fliessbewegung der gegebenenfalls zuvor erweichten Kunststoffmatrix. Hierbei wird der Endabschnitt in der beschriebenen Art aufgespreizt und zur Seite umgebogen. Das Aufspreizen des besagten Endabschnittes zu einzelnen Ästen kann mit oder ohne vorangehende Erwärmung des Stift-Elements geschehen. Die Wärmezufuhr kann bsp. durch die Verwendung eines vorgewärmten Werkzeuges, insbesondere eines vorgewärmten Stempels, geschehen.

Das mit einem Fussteil versehene Stift-Element kann nun wie beschrieben in das Strukturbauteil integriert werden.

Die Erfindung betrifft weiters ein Verfahren zur Herstellung eines Strukturbauteils aus faserverstärktem Kunststoff, enthaltend ein Verbindungselement zum Verbinden desselbigen mit wenigstens einem zweiten Bauteil.

Das Verfahren zeichnet sich dadurch aus, dass das gemäss obigen Angaben hergestellte Verbindungselement mit seinen Verankerungsmittel bei der Herstellung des Strukturbauteils in dieses integriert wird, wobei nach Fertigstellung des Strukturbauteils ein Strukturbauteil mit einem Verbindungselement in Form eines aus dem Strukturbauteil herausragenden, stiftförmigen Elementes vorliegt.

In einer bevorzugten Ausführung des Verfahrens wird das Strukturbauteil mittels eines LCM (Liquid Composite Moulding)-Verfahrens oder eines RTM (Resin Transfer Moulding)-Verfahrens, auch Harz-Fliessform-Verfahren genannt, hergestellt.

Im LCM-Verfahren werden in der Regel Kunststoffmatrix-Systeme aus Epoxidharzen, Polyester, PBT, PA oder aus anderen geeigneten thermoplastischen oder duroplastischen Kunststoffen verarbeitet.

Unter LCM-Verfahren oder LCM-Technologie wird in diesem Text ein Verfahren verstanden, in welchem der Hohlraum eines mehrteiligen Formwerkzeuges, insbesondere eines zweiteiligen Formwerkzeuges, mit einem ein- oder mehrteiligen Faserrohling oder Fasergebilde beschickt wird und in den Hohlraum des geschlossenen Formwerkzeuges eine duro- oder thermoplastische Kunststoffmatrix eingespeist bzw. injiziert wird, welche den Faserrohling unter Ausbildung eines Faserverbundbauteils durchfliesst und imprägniert und den Hohlraum des Formwerkzeugs füllt, und nach Abschluss der Formfüllung das Faserverbundbauteil zur Aushärtung bzw. Polymerisation gebracht und anschliessend entformt wird. Das besagte LCM-Verfahren umfasst selbsverständlich auch Varianten mit Schmelzkernen, bzw. permanenten Kernen, wie z.B. Schaumstoffkernen, welche zusammen mit den Fasergebilden in das geöffnete Formwerkzeug eingelegt werden.

Wird im vorgenannten Verfahren ein duroplastisches Kunststoffmatrixsystem verarbeitet, so handelt es sich um ein RTM-Verfahren. Das LCM-Verfahren versteht sich somit als dem RTM-Verfahren übergeordnete Bezeichnung für das voran beschriebene Verfahren, welches neben duroplastischen Kunststoffmatrixsystemen auch thermoplastische Kunststoffmatrixsysteme umfasst.

Das RTM-Verfahren ist beispielsweise in Kötte, "Der Resin-Transfer-Molding-Prozess - Analyse eines Harzinjektionsverfahrens", Verlag TÜV Rheinland, 1991 ausführlich beschrieben.

Die Integration des Verbindungselements geschieht, indem das Verbindungselement mit seinen Verankerungsmittel in die Werkzeugform eingelegt wird. Die Verankerungsmittel werden hierzu bevorzugt zwischen die bereits eingelegten Fasergebilde eingebettet. Die Verankerungsmittel werden bsp. zwischen Lagen von textilen Faserflächengebilde eingebettet, wobei das Verbindungselement wenigstens eine Lage der Faserflächengebilde durchstösst. Die Verankerungsmittel können während dem beschicken der Werkzeugform mit Verstärkungsfasern vorgängig mit einem polymerisierbaren Ausgangsmaterial imprägniert bzw. mit einem entsprechenden Pulver des besagten Ausgangsmaterial behandelt werden.

Das Ausgangsmaterial zur Herstellung der PBT-Kunststoffmatrix, kann beispielsweise zyklische Oligomere, insbesondere des CPBT, welche mit einem Katalysator, insbesondere einen Zink-Katalysator, vermengt sind, enthalten oder ein Polymerblend (Kunststofflegierung) davon sein. Besonders geeignete zyklische Oligomere werden unter dem Namen CBT™ (cyclic butylene terephthalate) von der Firma Cyclics oder Dow Chemicals hergestellt. Die Wahl des Katalysators, welcher dem Prepolymer beigemischt wird, hängt von der angestrebten Reaktivität des Ausgangsgemischs ab. Die verschiedenen, verwendbaren (an dieser Stelle nicht näher beschriebenen) Katalysatoren decken ein breites Spektrum an Reaktivität ab, und deren Wahl hat letztendlich den entscheidenen Einfluss auf die Taktzeiten im Fertigungsprozess.

Das Ausgangsmaterial kann ein Einkomponenten-System sein, bei welchem der Polymerisations-Katalysator bereits beigemischt ist, oder ein Zweikomponenten-System mit einem Flüssigkatalysator sein. Das Einkomponenten-System kann bsp. als Feststoff in Pulver- oder Granulatform vorliegen.

In besonders bevorzugter Ausführung besteht sowohl die Kunststoffmatrix des Verbindungselements als auch die Kunststoffmatrix des Strukturbauteils aus einem PBT oder einem PBT-Blend, wobei wenigstens zur Herstellung des Strukturbauteils zyklische Oligomere des PBT, insbesondere CBT™, oder ein Blend davon in einem LCM-Verfahren verarbeitet werden. Die Verarbeitung von vorgenannten zyklischen Oligomeren zur Herstellung von PBT bzw. PBT-Blend ist beispielsweise in der US 6,369,157 B1 näher beschrieben, deren Inhalt hiermit Teil vorliegender Offenbarung ist.

Auf der Kavität zugewandten Innenseite der Werkzeugform können entsprechende Ausnehmungen vorgesehen sein, welche die später aus dem fertigen Strukturbauteil herausragenden stiftförmigen Elemente aufnehmen. Die Ausnehmungen können mit einem Ausstosser versehen sein. Die Ausnehmungen können dergestalt sein, dass sie die stiftförmigen Elemente passgenau aufnehmen. Ferner können die Ausnehmungen in ihrem Durchmesser auch etwas grösser ausgebildet sein als der Durchmesser des stiftförmigen Elements, so dass sich zwischen der Werkzeugform und dem stiftförmigen Element in der Ausnehmung ein Spalt ausbildet, in welchen während des LCM- bzw. RTM-Prozesses die Kunststoffmatrix eindringt, so dass sich um das stiftförmige Element eine zusätzliche, bsp. vergleichsweise dünne, Kunststoffschicht bildet.

Die Ausnehmungen sind bsp. Bohrungen in der Werkzeugform. Die Bohrungen können Mittel, wie z.B. Imbusschrauben beinhalten, mit welchen die Ausnehmungen auf die Länge der stiftförmigen Elemente eingestellt werden können.

Da durch fussförmige Verankerungsmittel dem Strukturbauteil zusätzliches Material hinzugefügt wird und eine Änderung des Fasergehalts in diesem Bereich vermieden werden soll, kann auf der Rückseite des Strukturbauteils im Werkzeug eine Einsenkung, bsp. eine kreisförmige Einsenkung, vorgesehen sein, welche auf der Höhe des Verbindungselements eine rückseitige lokale Aufdickung im Strukturbauteil bewirkt.

Bei der nachfolgenden Injektion der Kunststoffmatrix wird das Verbindungselement integral mit dem Bauteil verbunden. Dabei imprägniert die injizierte Kunststoffmatrix nicht nur die Fasern sondern umschliesst auch die eingebetteten Verankerungsmittel und bildet mit diesen bei der Aushärtung bzw. Polymerisation eine innige Verbindung aus. Nach der Entformung des Strukturbauteils liegt ein Verbindungselement in Form eines aus dem Strukturbauteil herausragenden stiftförmigen Elementes vor.

Das LCM-Verfahren kann ferner auch Verfahren zur Herstellung von Hohlkörpern mit erfindungsgemässen Verbindungselementen mittels Kernausschmelztechnik, d.h. durch Einlegen von ausschmelzbaren Schmelzkernen in das geöffnete Formwerkzeug, sowie die Herstellung von Faserverstärkten Kunststoffkörpern mit erfindungsgemässen Verbindungselementen, enthaltend einen permanenten Kern, wie z.B. einen Schaumstoffkern, welcher zusammen mit den Fasergebilden in das geöffnete Formwerkzeug eingelegt wird, umfassen.

Die Erfindung betrifft auch die Verbindung zwischen einem Strukturbauteil aus Kunststoff und wenigstens einem zweiten Bauteil mittels wenigstens einem erfindungsgemässen Verbindungselement.

Die Verbindung zeichnet sich dadurch aus, dass das Verbindungselement in das Strukturbauteil integral eingebettete Verankerungsmittel und einen aus dem Strukturbauteil herausragendes stiftförmiges Element beinhaltet, welches durch eine Ausnehmung im zweiten Bauteil geführt ist. Auf der gegenüberliegenden Seite der Ausnehmung ist ein mit dem stiftförmigen Element integral verbundenes Kopfteil zur Herstellung der kraftschlüssigen Verbindung angeordnet.

Das Kopfteil liegt bevorzugt der freien Oberfläche des zweiten Bauteil an. In einer Ausführungsvariante der Erfindung kann zwischen dem Kopfteil und dem zweiten Bauteil ferner ein Unterlagselement angeordnet sein. Das Unterlagselement ist bevorzugt scheibenförmig und enthält eine mittig angeordnete Ausnehmung zum Durchlass des stiftförmigen Elements. Das Unterlagselement ist also vorzugsweise in Form einer Unterlagsscheibe ausgebildet. Das Unterlagselement kann aus einem unverstärkten Kunststoff, insbesondere aus einem thermoplastischen Kunststoff, gegebenenfalls aus demselben Kunststoff wie das Verbindungselement sein. Das Unterlagselement kann auch aus einem verstärkten, insbesondere faserverstärkten Kunststoff der oben genannten Art sein.

Das Unterlagselement wird bei der Herstellung des Kopfteils (Schliesskopf) durch die Wärmeeinwirkung bevorzugt mit dem Kopfteils verschweisst, wodurch im Prinzip eine Erhöhung des Kopfteils erreicht wird, ohne dass die Verstärkungsfasern im Kopfteil selbst über den kritischen Krümmungsradius der Fasern hinaus abgelenkt werden müssen.

Es ist ferner auch möglich, dass zwischen dem Strukturbauteil und dem zweiten Bauteil ein oder mehrere weitere Bauteile sandwichartig angeordnet sind, wobei das stiftförmige Element des Verbindungselements durch Ausnehmungen bzw. Bohrungen sowohl des zweiten Bauteils als auch der dazwischenliegenden, weiteren Bauteilen geführt ist.

In einer weiteren bevorzugten Ausführung der Erfindung ist die Bauteil-Verbindung eine kombinierte Verbindung aus einer form-/kraftschlüssigen Verbindung mittels erfindungsgemässen Verbindungselementen und einer Klebverbindung. Das Verbindungselement weist gemäss dieser Ausführung, wie oben beschrieben, bevorzugt einen Abstandshalter auf. Der Abstandshalter dient dazu, zwischen den beiden zu verbindenden Bauteile einen den Klebstoff aufnehmenden Spalt beizubehalten. Der durch die Abstandshalter begründete Spalt wird durch den Klebstoff ausgefüllt, wobei der Abstandhalter verhindert, dass beim Fügen der Bauteile mittels erfindungsgemässen Verbindungselementen die beiden Bauteile in direktem Kontakt aneinander gedrückt und der Klebstoff aus dem sich verkleinernden Spalt zwischen den beiden Bauteilen hinaus gepresst wird. Der durch den Abstandhalter beibehaltene Spalt kann bsp. in der Grössenordnung von 0,1 bis 2 mm sein.

Die Kombination der erfindungsgemässen Verbindungstechnik unter Verwendung der beschriebenen Verbindungslemente mit einer flächigen Klebeverbindung ist im Gegensatz zu einer reinen Klebstoffverbindung dauerhaft gegenüber Abschälbeanspruchung. Ferner Übemehmen die Verbindungselemente gemäss Erfindung von Anfang an Scher-, Zug- oder Abschälkräfte, d.h. bereits vor der vollständigen Aushärtung des Klebstoffes, so dass die gefügten Bauteile schon viel früher wieder beansprucht werden können, als dies bei ausschliesslich geklebten Bauteilen üblich ist. Die geklebten Bauteile werden im weiteren durch die erfindungsgemässe Verbindung bis zur Aushärtung des Klebstoffes fixiert, wodurch auf separate Fixiervorrichtungen verzichtet werden kann.

Eine Bauteil-Verbindung kann Verbindungen aus einem, jedoch bevorzugt aus mehreren der erfindungsgemässen Verbindungselementen enthalten, dies insbesondere in jenen Anwendungen, bei welchen funktionsintegrierte Abstandshalter eingesetzt werden. In bevorzugter Ausführung der Erfindung besteht die Verbindung aus einem Strukturbauteil und einem zweiten Bauteil und mehreren, die beiden Bauteile verbindenden Verbindungselementen.

Die erfindungsgemässe Verbindungstechnik kann neben Klebstoffverbindungen selbstverständlich auch noch mit weiteren bekannten Verbindungstechniken, wie Kunststoffschweissen, Clip-Verbindungen etc., kombiniert werden.

Das dazugehörige Verfahren zur Herstellung einer erfindungsgemässen Verbindung der oben beschriebenen Art, zeichnet sich dadurch aus, dass das stiftförmige Element des Verbindungselements durch eine Öffnung im zweiten Bauteil geführt wird, wobei die Länge des stiftförmigen Elements derart bemessen ist, dass dessen freier Endabschnitt um ein bestimmtes Mass aus der Ausnehmung über die freie Oberfläche des zweiten Bauteils hinausragt. Mittels eines, bevorzugt erwärmten, Stempels wird unter Wärmeeinwirkung und mittels Druckbeaufschlagung durch den Stempel der genannte freie Endabschnitt des stiftförmigen Elements unter Ausbildung eines Kopfteils bzw. Schliesskopfes eine form- und /oder kraftschlüssige Verbindung zwischen dem Strukturbauteil und dem zweiten Bauteil hergestellt. Der thermoplastische Kunststoff des besagten Endabschnittes wird hierzu auf wenigstens seine Erweichungstemperatur erwärmt, wobei durch plastische Umformung der Endabschnitt gestaucht oder radial zur Seite abgelenkt und unter Ausbildung des Schliesskopfes verbreitert wird. Der Schliesskopf ist hierbei mit dem stiftförmigen Element integral verbunden und verankert das Verbindungselement form- und kraftschlüssig am zweiten Bauteil, indem der Durchmesser des Schliesskopfes grösser ist, als die Öffnung im zweiten Bauteil, durch welche das stiftförmige Element geführt ist.

Wird der besagte Endabschnitt beim Umformvorgang radial zur Seite abgelenkt, so werden die Verstärkungsfasern im stiftförmigen Element ebenfalls radial nach aussen abgelenkt. Wird der besagte Endabschnitt beim Umformvorgang gestaucht, so werden die Verstärkungsfasern im stiftförmigen Element bogenförmig radial nach aussen abgelenkt. Die Verstärkungsfasern können ferner auch in der Form von offenen Schlaufen umgeformt werden.

Die Matrix und die Verstärkungsfasern werden hierbei zweckmässig gemeinsam umgeformt und bleiben zusammen, d.h. es findet zweckmässig kein Wegfliessen der Matrix von den Verstärkungsfasern statt.

Die Wärmezufuhr zum herzustellenden Schliesskopf kann bsp. durch Beheizung des Stempels, durch Heissluftzufuhr, durch Einsatz von Infrarot-Strahlern, Ultraschall-Geräten, Induktions-Heizungen oder durch Kombination der vorgenannten Methoden erfolgen.

Der Schliesskopf weist in Draufsicht bevorzugt eine kreisförmige Gestalt mit einer zum Zentrum hin zunehmenden Verdickung des Querschnitts auf. Der Schliesskopf ist bevorzugt von einer kugelsegmentförmigen Gestalt, welche einem Schraubenkopf, und insbesondere einem Nietkopf ähnlich ist.

Der Schliesskopf weist in einer Ausführungsvariante der Erfindung im Zentrum eine kraterartige Vertiefung auf. Der dazugehörige Stempel zur Herstellung des Schliesskopfes, weist eine vorzugsweise konkave Vertiefung auf, mit einer im Zentrum des Stempels angebrachten dornartigen Erhebung.

Bei der, vorzugsweise plastischen, Umformung des genannten Endabschnittes zu einem Schliesskopf, werden im Endabschnitt verlaufende Fasern oder Faserstränge in einem Winkel zur Längsrichtung des Stiftes in den Querschnitt des Kopfteils umgebogen. Die Fasern oder Faserstränge verlaufen dabei ausgehend vom Zentrum des Kopfteils vorzugsweise in fächer- bzw. strahlenförmiger Anordnung radial zum Schliesskopfrand nach aussen. Enthält das Verbindungselement schichtweise angeordnete Fasern, so werden diese entsprechend schichtweise umgebogen und aufgefächert. Die besagten Fasern oder Faserstränge tragen dabei wesentlich zur verankernden Wirkung bzw. zur kraftschlüssigen Verbindung bei.

In bevorzugter Ausführung erstrecken sich die Fasern bzw. Faserstränge über die gesamte Länge der Verankerungsmittel, des stiftförmigen Elements und des Kopfteils, so dass sich die Fasern bzw. Faserstränge des Verbindungselements nach dem Fügeprozess unterbruchslos von den Verankerungsmittel durch das stiftförmige Elemente bis in den Schliesskopf erstrecken.

Die Übergänge zwischen Verankerungsmittel und stiftförmigem Element bzw. zwischen Schliesskopf und stiftförmigem Element sind bevorzugt weich, das heisst gerundet oder angeschrägt - dies zur Vermeidung von Kerbwirkungen. Entsprechend sind auch die Öffnungen bzw. Bohrungen in den anzubindenen Bauteilen vorzugsweise angefast oder weisen gerundete Übergänge auf.

Das erfindungsgemässe Verbindungskonzept entspricht im wesentlichen einer Nietverbindung, wobei das Kopfteil bzw. der Schliesskopf dem Nietkopf und das stiftförmige Element dem Nietschaft entspicht. Im Unterschied zur herkömmlichen Nietverbindung enthält das vorliegende Verbindungselement keinen eigentlichen Setzkopf, welcher analog zum Nietkopf auf der freien Oberfläche des entgegenliegenden Bauteils angeordnet ist. Anstelle des Setzkopfes liegt ein integral in das Strukturbauteil eingegebettetes Fussteil bzw. Nietfuss vor, welches das Verbindungselement im Strukturbauteil verankert. Das Fussteil kann jedoch durchaus von ähnlicher Gestalt sein wie ein aus herkömmlichen Nietverbindungen bekannter Setzkopf.

Ist der Nietschaft massiv ausgestaltet, so entspricht die Verbindungsart im wesentlichen einem Vollniet. Ist der Nietschaft hingegen vollständig oder wenigstens in seinem Endabschnitt hohl ausgebildet, so entpricht die Verbindungsart im wesentlichen einem Hohlniet.

Die Herstellung der Verbindung, insbesondere des Schliesskopfes, ist dabei vom Prinzip her ähnlich der Herstellung des Nietkopfes. Ein wesentlicher Unterschied liegt jedoch darin, dass die thermoplastische Kunststoffmatrix des umzuformenden Abschnittes vorgängig unter Wärmezufuhr in einen Erweichungszustand überführt wird.

Das zweite Bauteil kann aus einem beliebigen Werkstoff oder einer Kombination zweier oder mehrerer Werkstoffe sein und beispielsweise aus einem Kunststoff, insbesondere faserverstärkten Kunststoff, aus einem Metall, insbesondere aus einem Aluminium oder einer Aluminiumlegierung sein. Ferner kann das Bauteil aus einem Verbund von Metall, insbesondere Aluminium, und einem Kunststoff sein.

Die Bauteile sind vorzugsweise wenigstens an ihren Verbindungsstellen flächenförmig ausgebildet. In weiterer Ausführung der Erfindung sind die zu verbindenden Bauteile wenigstens an ihren Verbindungsflächen plattenförmig ausgebildet.

Die flächen- bzw. plattenförmigen Verbindungsabschnitte der Bauteile weisen zweckmässig eine Schicht- oder Gesamtdicke von 1 bis 50 mm, vorzugsweise von 2 bis 20 mm, und insbesondere von 2 bis 10 mm auf.

Das zweite Bauteil kann ebenfalls ein Strukturbauteil sein, d.h. ein Bauteil, welches für den diese Bauteile enthaltenden Gegenstand von struktureller Bedeutung ist. Das Bauteil kann auch ein an eine Grundstruktur angefügtes Zusatz- bzw. Aufsatzbauteil sein, welchem eine spezifische Funktion zugewiesen ist.

Eine Ausführungvariante einer erfindungsgemässen Verbindung umfasst ein Fügeteil aus einem Aluminiumblech und einem CFK-Fügeteil (Kohlefasern verstärktes Kunststoffbauteil). Beide Fügeteile, in einer Dicke von 2 bis 5 mm vorliegend, sind mittels mehreren integrierten, faserverstärkten Thermoplast-Nieten gefügt.

Die erfindungsgemässe Verbindungstechnik zeichnet sich durch eine hohe Kopfzug- und Scherfestigkeit aus und weist ferner den Vorteil auf, dass das Verbindungselement aus einem industriell herstellbaren, kostengünstigen Stangenmaterial fabriziert werden kann. Der zusätzliche Aufwand, welcher die Integration des vorgeformten Verbindungselements in das Strukturbauteil bei dessen Herstellung mit sich bringt, wird dadurch kompensiert, dass durch die Funktionsintegration des Verbindungselements in das Strukturbauteil keine Bohrungen zur Herstellung von herkömmlichen Nietverbindungen im Strukturbauteil vorgenommen werden müssen. Das Strukturbauteil wird demzufolge auch nicht durch derartige Nachbearbeitungsschritte geschwächt.

Ferner wird auch die Logistik im Zusammenhang mit der Bereitstellung der Verbindungselemente (wie Nieten oder Schrauben) beim Fügen der Bauteile sowie die Montage an sich erleichtert.

Funktionsintegrierte Abstandhalter ersetzen ferner weitere Elemente wie Abstandscheiben, wodurch der logistische Aufwand weiter reduziert und die Montage vereinfacht werden kann.

Da die Verbindungselemente der vorzugsweise in Serie hergestellten Strukturbauteile mit grosser Genauigkeit stets an denselben Positionen im Strukturbauteil angeordnet sind, können diese überdies als Positionierungshilfen für die zu verbindenden Bauteile dienen. Dies vereinfacht wiederum die Montage, da auf separate Positionierungshilfen bzw. Halterungssysteme verzichtet werden kann.

Ein weiterer Vorteil bietet sich ferner dadurch, dass das erfindungsgemässe Verbindungselement ebenfalls aus einem Kunststoff besteht und somit gegebenenfalls von Korrosionsschutzmassnahmen abgesehen werden kann.

Erfindungsgemässe Strukturbauteile, Verbindungselemente bzw. Verbindungen finden Anwendung im Strassen- und Schienenfahrzeugbau, in der Luft- und Raumfahrt, sowie bei Wasserfahrzeugen. Weitere Anwendungsgebiete sind Sportgeräte für z.B. Wassersport, Radsport, Flugsport oder Tennissport. Ferner kann der Erfindungsgegenstand auch Anwendung im Hoch- oder Tiefbau finden.

Im folgenden wird die Erfindung beispielhaft und mit Bezug auf die beiliegenden Zeichnungen näher erläutert. Es zeigen:
- Fig. 1a:: ein erfindungsgemässes Verbindungselement;
- Fig. 1b:: ein weiteres erfindungsgemässes Verbindungselement;
- Fig. 2:: integral mit dem Strukturbauteil verbundene Verbindungselemente gemäss Erfindung;
- Fig. 3:: eine perspektivische Ansicht einer Verbindung zwischen einem Strukturbauteil und einem zweiten Bauteil mittels eines erfindungsgemässen Verbindungselements;
- Fig. 4:: einen Querschnitt durch eine weitere erfindungsgemässe Verbindung;
- Fig. 5:: eine perspektivische Ansicht einer weiteren Verbindung zwischen einem Strukturbauteil und einem zweiten Bauteil mittels eines erfindungsgemässen Verbindungselements;
- Fig. 6:: einen Querschnitt durch eine weitere Ausführungsvariante eines Schliesskopfes.

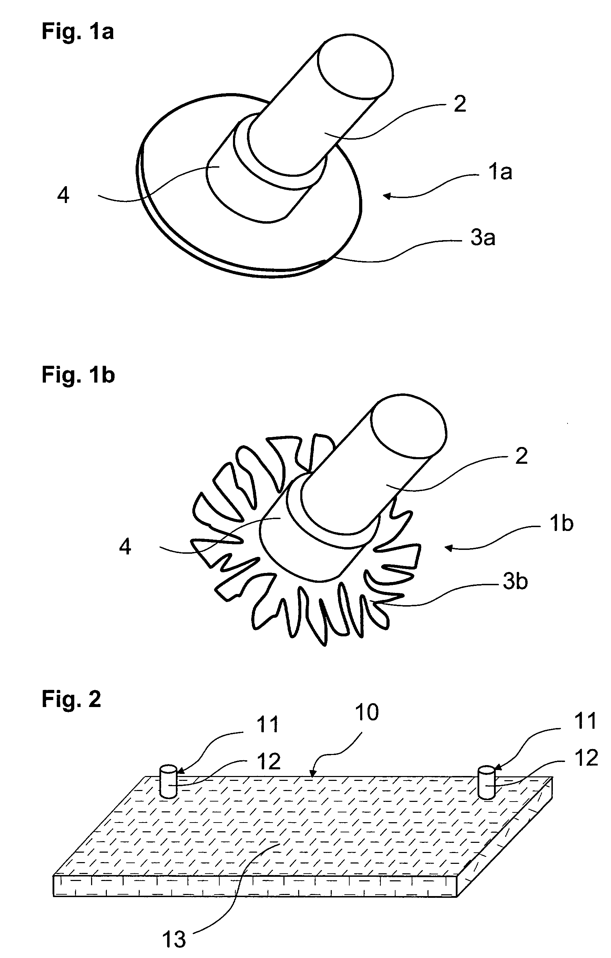

Fig. 1a und 1b zeigen ein Verbindungselement 1a, 1b in jener Ausgestaltung in der es auf beschriebene Weise in ein Strukturbauteil integriert wird. Das Verbindungselement 1a, 1b ist in der Art eines Vollnietes ausgestaltet und weist ein in die Kunststoffmatrix eines Strukturbauteils zu integrierendes Fussteil 3a, 3b sowie einen an das Fussteil 3a, 3b anschliessenden Schaft 2 auf. Der Schaft 2 weist einen zu vorgenanntem Zwecke vorgesehenen Abstandhalter 4 in Form einer zum Fussteil 3a, 3b hin angeordneten, vollumfänglichen, gleichmässigen Verdickung des Schaftes 2 auf, welche über eine treppenartige Abstufung in den kleineren Durchmesser des Schaftes 2 übergeht. Das Verbindungselement 1a, 1b gemäss Fig. 1a und 1b kann jedoch auch ohne Abstandhalter 4 bzw. Verdickung zum Fussteil 3a, 3b hin ausgebildet sein.

Das Verbindungselement 1a, 1b ist aus einem Kunststoff und enthält Verstärkungsfasern, welche sich vom Fussteil 3a, 3b über die Längsrichtung des Schaftes 2 bis ans Schaftende durchgehend erstrecken und im Fussteil 3a, 3b ausgehend vom Schaft 2 strahlenartig aufgespreizt sind und in einem Winkel von rund 90° vom Schaft 2 radial wegführen.

Das Schaftende, bzw. der Schaftendabschnitt wird zur Herstellung der Verbindung zwischen dem Strukturbauteil und dem zweiten Bauteil zum entsprechenden Zeitpunkt, wie vorgängig beschrieben, mittels Stempel in einen Schliesskopf umgeformt, wobei die Verstärkungsfasern des entstehenden Schliesskopfes seitlich umgebogen werden und strahlenförmig aufgespreizt vom Schaft wegführen.

Das Fussteil 3a des Verbindungselements 1a gemäss Fig. 1a ist kopfförmig, d.h. in der Art eines Schrauben- oder Nietkopfes ausgestaltet. Das Fussteil 3a wird durch plastische Umformung eines Endabschnittes des Stift-Elementes hergestellt. Dies geschieht bsp. mittels eines Stempels unter Wärmeeinwirkung. Die radial bzw. strahlenförmig aufgefächerten Fasern oder Faserstränge im Fussteil 3a sind somit von einer geschlossenen Kunststoffmatrix umgeben.

Das Fussteil 3b des Verbindungselements 1b gemäss Fig. 1b ist fransenartig bzw. fingerartig aufgespreizt, wobei die einzelnen Fransen oder Finger durch Fasern bzw. Faserstränge oder Gruppen von Fasern oder Fasersträngen und der diese umgebenden oder an diesen haften bleibenden Kunststoffmatrix gebildet werden. Das Aufspreizen bzw. Aufspalten geschieht durch Einwirkung mechanischer Kräfte wie die eines Stempels auf einen Endabschnitt des Stift-Elements. Dabei kommt es zu einer Deformation, bei welcher der Endabschnitt in der beschriebenen Art aufgespreizt und zur Seite umgebogen wird. Das Stift-Element wird vorzugsweise zuvor erwärmt.

Fig. 2 zeigt ein erfindungsgemässes Strukturbauteil 10 aus einem faserverstärkten Kunststoff enthaltend erfindungsgemässe Verbindungselemente 11 in der Form von in Fig. 1 beschriebenen Vollnieten. Das Verbindungselement 11 ist hierbei mit seinem Fussteil (nicht sichtbar) in die Kunststoffmatrix und zwischen die Fasergebilde 13 des Strukturbauteils 10 integral eingebettet und in diesem verankert. Die vorliegenden Verbindungselemente 11 weisen im Gegensatz zu jenen in Fig. 1a und 1b keinen Abstandhalter auf.

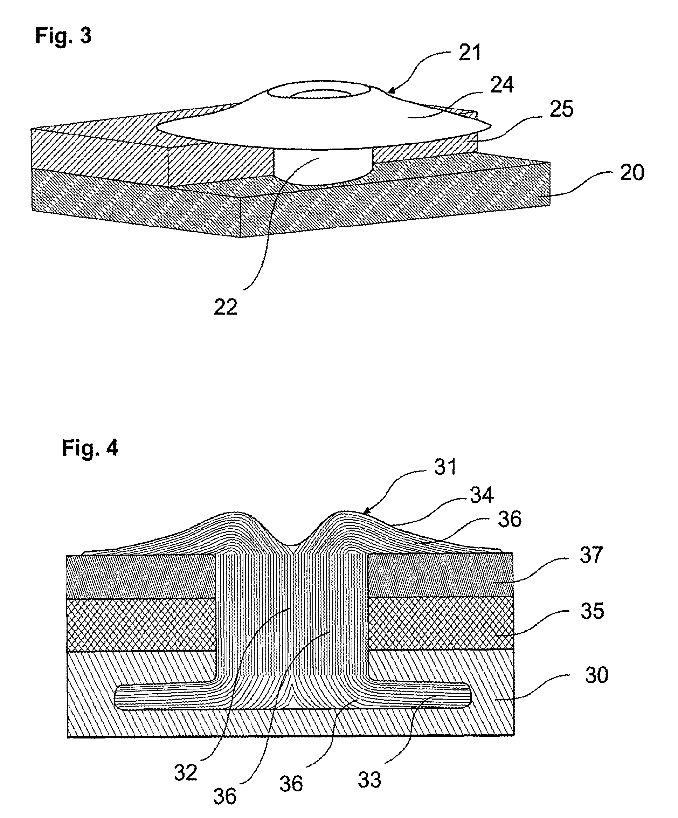

Die in Fig. 3 in perspektivischer Ansicht gezeigte Verbindung enthält ein Strukturbauteil 20 aus einem faserverstärkten Kunststoff, welches über ein erfindungsgemässes Verbindungselement 21 mit einem zweiten Bauteil 25 verbunden ist. Das Verbindungselement 21 ist in der Form eines Vollnietes ausgebildet, welcher wie oben beschrieben mit seinem Fussteil (nicht gezeigt) integral mit dem Strukturbauteil 20 verbunden und in diesem verankert ist. Das Verbindungselement 21 ist mit seinem Schaft 22 durch eine Bohrung im zweiten Bauteil 25 geführt. Das Verbindungselement 21 weist auf der dem Strukturbauteil 20 abgewandten Seite des zweiten Bauteils 25 einen mit dem Schaft 22 integral verbundenen Schliesskopf 24 auf, welcher notwendigerweise einen grösseren Querschnitt aufweist als die Bohrung bzw. als der Schaft 22, und welcher das zweite Bauteil 25 form- und kraftschlüssig an das Strukturbauteil 20 fügt.

Eine weitere Ausführung einer erfindungsgemässen Verbindung nach Fig. 4 enthält ein Strukturbauteil 30 aus einem faserverstärkten Kunststoff, ein erfindungsgemässes Verbindungselement 31 in Form einer Vollniet, welche wie oben beschrieben über ein Fussteil 33 integral mit dem Strukturbauteil 30 verbunden und in diesem verankert ist. Das Verbindungselement 31 verbindet das Strukturbauteil 30 mit einem zweiten Bauteil 35 aus z.B. einem Metall, wie Aluminium oder einer Aluminiumlegierung, wobei das Verbindungselement 31 mit seinem Schaft 32 durch eine Bohrung im zweiten Bauteil 35 geführt ist.

Das Verbindungselement 31 weist auf der dem Strukturbauteil 30 abgewandten Seite des zweiten Bauteils 35 einen mit dem Schaft 32 verbundenen Schliesskopf 34 auf, welcher notwendigerweise einen grösseren Querschnitt aufweist als die Bohrung bzw. der Schaft 32, und welcher das zweite Bauteil 35 form- und kraftschlüssig an das Strukturbauteil 30 fügt.

Zwischen dem zweiten Bauteil 35 und dem Schliesskopf 34 ist ferner zur Verhinderung von Kontaktkorrosion mit dem Metallbauteil eine Unterlagsscheibe 37 aus einem faserverstärkten Kunststoff angeordnet.

Das Verbindungselement 31 enthält vom Fussteil 33 über den Schaft 32 in den Schliesskopf geführte Verstärkungsfasern 36, welche innerhalb des Schaftes 32 in dessen Längsrichtung angeordnet sind. Sowohl im Fussteil 33 als auch im Schliesskopf 34 sind die Fasern in die Ebene des Fussteils 33 bzw. Schliesskopfes 34 schichtweise umgebogen bzw. abgewinkelt und verlaufen strahlenförmig aufgefächert vom Schaft 32 weg.

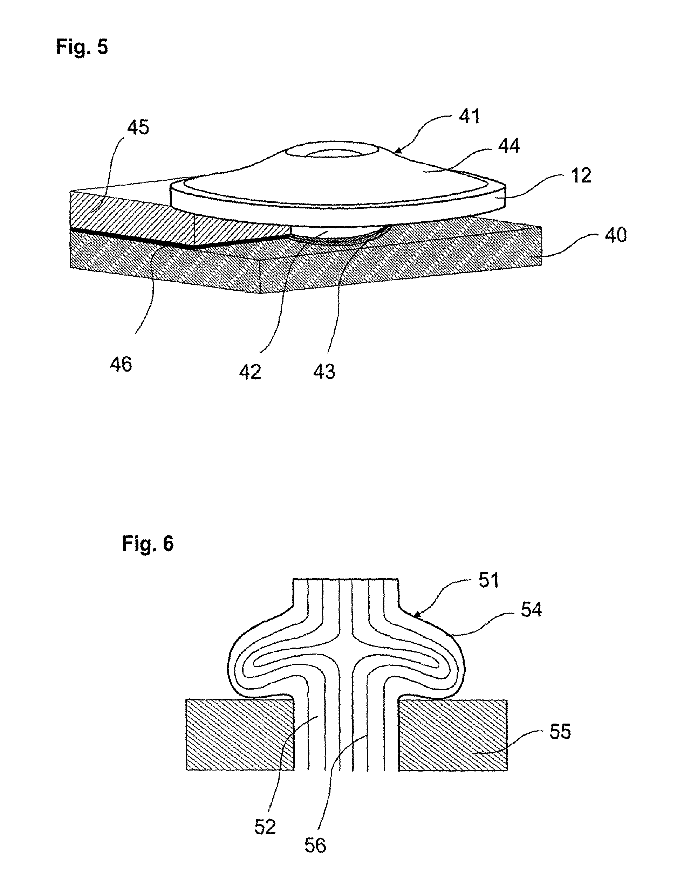

Fig. 5 zeigt eine weitere Ausführungsvariante einer Verbindung mit einem erfindungsgemässen Verbindungselement 41, welches ein Strukturbauteil 40 mit einem zweiten Bauteil 45 verbindet. Das Verbindungselement 41 ist in der Art einer Vollniet ausgebildet, welche wie oben beschrieben über ein Fussteil (nicht gezeigt) integral mit dem Strukturbauteil 40 verbunden und in diesem verankert ist. Das Verbindungselement 41 ist mit seinem Schaft 42 durch eine Bohrung im zweiten Bauteil 45 geführt. Auf der dem Strukturbauteil 40 abgewandten Seite des zweiten Bauteils 45 weist das Verbindungselement 41 einen integral mit dem Schaft 42 verbundenen Schliesskopf 44 auf, welcher notwendigerweise einen grösseren Querschnitt aufweist als die Bohrung bzw. der Schaft 42, und welcher das Strukturbauteil 40 form- und kraftschlüssig mit dem zweiten Bauteil 45 verbindet.

Zwischen dem Schliesskopf 44 und dem zweiten Bauteil 45 ist eine Unterlagsscheibe 47 aus einem faserverstärkten Kunststoff angeordnet. Ferner enthält das Verbindungselement 41 einen Abstandhalter 43 in Ausgestaltung einer vollumfänglichen, gleichmässigen Verdickung des am Fussteil anschliessenden Endabschnittes des Schaftes 42, wobei sich der Übergang von der fussseitigen Verdickung zum kleineren Schaftdurchmesser durch einen treppenartigen Absatz auszeichnet, an welchem das gefügte zweite Bauteil 45 ansteht. Dadurch wird ein Hohlraum 46 gebildet, in welchem ein zuvor auf das Strukturbauteil und/oder zweite Bauteil applizierter Klebstoff eingebracht ist. Die beschriebene Verbindung ist somit eine Hybridverbindung bestehend aus einer Klebstoffverbindung und einer erfindungsgemässen, nietartigen Verbindung.

Die Ausführungsvariante eines Schliesskopfes 54 gemäss Fig. 6 zeichnet sich dadurch aus, dass das stiftförmige Element 52 einends unter Ausbildung einer bauchigen Querschnittsverbreiterung in seiner Längsrichtung, d.h. in Axialrichtung, gestaucht ist. Das betreffende Verbindungselement 51 enthält Verstärkungsfasern 56, welche im Schliesskopf schlaufenartig bzw. bauchig aus der Längsrichtung des stiftförmigen Elements 52 seitwärts abgelenkt sind und radial nach aussen zum Rand des Schliesskopfes 54 verlaufen. Die Verstärkungsfasern 56 gemäss dieser Ausführungsvariante sind im Stabausgangsmaterial bevorzugt axial verdreht angeordnet.

Die vorliegende Ausbildung des Schliesskopfes zeichnet sich durch eine grössere Schliesskopfhöhe aus, wodurch bsp. die Kopfzugfestigkeit erhöht wird. Zur Herstellung des Schliesskopfes 54 wird insbesondere der zu stauchende Abschnitt des stiftförmigen Elements 52 erwärmt und erweicht, wohingegen der freie Endabschitt des stiftförmigen Elements vorzugsweise nicht oder nur wenig erwärmt wird und praktisch unverformt bleibt. Die Umformung geschieht auch hier bsp. Mittels eines einen Axialdruck ausübenden Stempels.

## Patentansprüche

1. Strukturbauteil (30) aus einem Kunststoff mit einem Verbindungselement (31) aus einem faserverstärkten Kunststoff zum Verbinden des Strukturbauteils (30) mit wenigstens einem zweiten Bauteil (35),
**dadurch gekennzeichnet, dass**
das Verbindungselement (31) ein vom Strukturbauteil (30) abragendes stiftförmiges Element (31) sowie Verankerungsmittel (33) enthält, und die Verankerungsmittel (33) an das stiftförmige Element (31) anschliessen und integral im Strukturbauteil (30) eingebunden sind, und das stiftförmige Element (31) der Erstellung einer form- und/oder kraftschlüssigen, nietartigen Verbindung des Strukturbauteils (30) mit wenigstens dem zweiten Bauteil (35) dient.

2. Strukturbauteil nach Anspruch 1, wobei die Verankerungsmittel (33) aus einem Fussteil (33) mit einer gegenüber dem stiftförmigen Element (31) fussartigen Verbreiterung bestehen, und das Fussteil (33) an das stiftförmige Element (31) anschliesst und integral im Strukturbauteil (30) verankert ist.

3. Strukturbauteil nach einem der Ansprüche 1 bis 2, wobei das stiftförmige Element (31) in der Art eines Bolzens oder Zapfens aus dem Strukturbauteil (30) ragt.

4. Strukturbauteil nach einem der Ansprüche 1 bis 3, wobei das Verbindungslement (31) Verstärkungsfasern (36) enthält, welche aus dem stiftförmigen Element (31) in die Verankerungsmittel (33) geführt sind und das Verbindungselement (31) im Strukturbauteil (33) verankern.

5. Strukturbauteil nach einem der Ansprüche 1 bis 4, wobei das Strukturbauteil (30) aus einem faserverstärkten Kunststoff ist.

6. Strukturbauteil nach einem der Ansprüche 1 bis 5, wobei das stiftförmige Element (31) in seine Längsrichtung verlaufende und in die Verankerungsmittel (33) führende Fasern oder Faserstränge enthält, welche im Übergang vom stiftförmigen Element zu den Verankerungsmittel (33) umgebogen und fächerförmig, radial nach aussen geführt sind.

7. Strukturbauteil nach einem der Ansprüche 1 bis 6, wobei das Verbindungselement (41) einen am stiftförmigen Element (42) integral angeordneten Abstandhalter (43) enthält.

8. Strukturbauteil nach Anspruch 7, wobei der Abstandhalter (43) in Form einer Verbreiterung oder Querschnittsvergrösserung des dem Verankerungsmittel zugewandten Endabschnittes des stiftförmigen Elementes (42) ist, und die Verbreiterung im Übergang zum kleineren Durchmesser des stiftförmigen Elementes (42) in der Art einer Stufe vorliegt.

9. Strukturbauteil nach Anspruch 1, wobei das stiftförmige Element (32) des Verbindungselements (31) Fasern oder Faserstränge enthält und die Verankerungsmittel aus Fasern oder Fasersträngen bestehen, welche einzeln aus dem stiftförmigen Element (31) austreten und integral im Strukturbauteil (30) verankert sind.

10. Verbindungselement aus Kunststoff zur Verwendung in einem Strukturbauteil nach Anspruch 1,
**dadurch gekennzeichnet, dass**
das Verbindungselement (1a) aus einem faserverstärkten Kunststoff besteht und Verankerungsmittel (3a) zur Verankerung des Verbindungslements (1a) im Strukturbauteil (10), und ein an die Verankerungsmittel (3a) anschliessendes stiftförmiges Element (2) oder Schaft enthält.

11. Verbindungselement nach Anspruch 10, wobei das Verbindungselement (1a) in eine Kunststoffmatrix eingebettete Fasern oder Faserstränge (36) enthält.

12. Verbindungselement nach einem der Ansprüche 10 bis 11, wobei die Verankerunsmittel (3a) ein Fussteil (3a) in Form einer fussartigen Verbreiterung umfassen.

13. Verbindungselement nach Anspruch 11, wobei die Fasern oder Faserstränge (36) des Verbindungselements (31) ausgehend von den Verankerungsmittel (3a) in Längsrichtung des stiftförmigen Elementes (32), vorzugsweise bis zum Ende des stiftförmigen Elements, verlaufen, und die Fasern oder Faserstränge (36) im Übergang vom stiftförmigen Element (32) zu den Verankerungsmittel (33) umgebogen und zum Rand der Verankerungsmittel (33) hin radial aufgefächert geführt sind.

14. Verbindungselement nach einem der Ansprüche 11 und 13, wobei die Fasern oder Faserstränge (36) von den Verankerungsmittel (33) bis in das stiftförmige Element (32), vorzugsweise bis zum Ende des stiftförmigen Elements (32), durchgehend und unterbruchslos verlaufen.

15. Verfahren zur Herstellung eines Strukturbauteils mit einem Verbindungselement nach Anspruch 1,
**dadurch gekennzeichnet, dass**
das Verbindungselement (31) ein stiftförmiges Element (32) mit einends am stiftförmigen Element (32) angeordneten Verankerungsmittel (33) ist und das Verbindungselement (31) mit seinen Verankerungsmittel (33) während der Herstellung des Strukturbauteils (30) integral mit dem Strukturbauteil (30) verbunden wird.

16. Verfahren nach Anspruch 15, wobei das Verbindungselement (31) mit seinen Verankerungsmittel (33) in einem LCM- oder RTM-Verfahren bei der Herstellung des faserverstärkten Strukturbauteils (30) in dieses integral eingebunden wird.

17. Verbindung zwischen einem Strukturbauteil (30) aus Kunststoff, enthaltend ein Verbindungselement (31) nach Anspruch 1, und wenigstens einem zweiten Bauteil (35),
**dadurch gekennzeichnet, dass**
das Verbindungselement (31) Verankerungsmittel (33), ein stiftförmiges Element (32) und einen Schliesskopf (34) umfasst, und das Verbindungselement (31) mit seinen Verankerungsmittel (33) integral im Strukturbauteil (30) verankert ist und mit dem stiftförmigen Element (32) durch eine Öffnung im zweiten Bauteil (35) geführt ist und auf der dem Strukturbauteil (30) entgegengesetzten Seite des zweiten Bauteils (35) der Schliesskopf (34) unter Ausbildung einer kraftschlüssigen Verbindung angeordnet ist.

18. Verbindung nach Anspruch 17, wobei die Verstärkungsfasern (36) des Verbindungselements (31) ausgehend von den Verankerungsmittel (33) in Längsrichtung des stiftförmigen Elements (32) bis in den Schliesskopf (34) verlaufen, und die Verstärkungsfasern (36) im Übergang vom stiftförmigen Element (32) zu den Verankerungsmittel (33) umgelenkt und fächerförmig nach aussen geführt sind.

19. Verbindung nach einem der Ansprüche 17 bis 18, wobei die Verstärkungsfasern (36) im Übergang vom stiftförmigen Element (32) zum Schliesskopf (34) umgebogen und zum Rand des Schliesskopfes (34) hin radial aufgefächert geführt sind.

20. Verbindung nach einem der Ansprüche 17 bis 19, wobei die Verstärkungsfasern (36) durchgehend und unterbruchslos von den Verankerungsmittel (33) über das stiftförmige Element (32) in den Schliesskopf (34) geführt sind.

21. Verbindung nach einem der Ansprüche 17 bis 20, wobei zwischen dem Schliesskopf (34) und dem zweiten Bauteil (35) ein Unterlagselement (37), vorzugsweise aus einem unverstärkten oder faserverstärkten Kunststoff, angeordnet ist.

22. Verbindung nach einem der Ansprüche 17 bis 21, wobei das Verbindungselement (41) einen zum Strukturbauteil (40) hin, integral am stiftförmigen Element (42) angeordneten Abstandhalter (43) in Form einer endseitigen Verbreiterung oder Querschnittsvergrösserung des stiftförmigen Elements (42) unter Ausbildung einer Stufe enthält.

23. Verfahren zur Herstellung einer nietartigen Verbindung zwischen einem Strukturbauteil (30), enthaltend ein Verbindungselement (31) nach Anspruch 1, und eines zweiten Bauteils (35),
**dadurch gekennzeichnet, dass**
das stiftförmige Element (32) des Verbindungselements (31) durch eine Öffnung im zweiten Bauteil (35) geführt wird und ein Stempel auf den aus der Öffnung ragenden, freien Endabschnitt des stiftförmigen Elementes (32) angesetzt wird und mittels Druckbeaufschlagung und Wärmeeinwirkung ein Schliesskopf (34) ausgebildet wird, welcher eine form- und/oder kraftschlüssige Verbindung zwischen dem Strukturbauteil (30) und dem zweiten Bauteil (35) herstellt.

24. Verfahren nach Anspruch 23, wobei der aus der Öffnung ragende Endabschnitt des stiftförmigen Elementes (32) unter Umbiegung und radialer Auffächerung der im stiftförmigen Element (32) in Längsrichtung geführten Fasern in einen Schliesskopf (34) umgeformt wird.
